# FASCICULE DE BREVET EUROPEEN

(11) **EP 1 155 488 B1**
(45) Date de publication et mention de la délivrance du brevet: **31.10.2007**
(21) Numéro de dépôt: 00900594.3
(22) Date de dépôt: 17.01.2000
(51) Int. Cl.: H02H 7/30

(54) **DECLENCHEUR ELECTRONIQUE SELECTIF**
SELEKTIVER ELEKTRONISCHER AUSLÖSER
SELECTIVE ELECTRONIC TRIPPING ELEMENT

(30) Priorité: 25.02.1999 FR 9902589
(43) Date de publication de la demande: 21.11.2001
(73) Titulaire: SCHNEIDER ELECTRIC INDUSTRIES SAS, 92500 Rueil-Malmaison (FR)
(72) Inventeur: BOUDAUD, Dominique, F-38180 Seyssins (FR)
(74) Mandataire: Tripodi, Paul
(86) Numéro de dépôt international: PCT/FR2000/000086
(87) Numéro de publication internationale: WO 2000/051217

(56) Documents cités:
- EP-A- 0 872 939
- KIMBLIN C W ET AL: "SERIES RATINGS OF PROTECTIVE DEVICES" IEEE ANNUAL TEXTILE, FIBER AND FILM INDUSTRY TECHNICAL CONFERENCE,US,NEW YORK, IEEE, page 1-7 XP000704237 ISBN: 0-7803-3298-9

## Description

L'invention concerne un déclencheur électronique sélectif associé à un disjoncteur et comportant :
- des moyens de mesure du courant traversant le disjoncteur,
- des moyens de traitement, connectés aux moyens de mesure du courant et comportant des moyens de détermination d'une grandeur représentative de la valeur crête du courant, des moyens de comparaison de ladite grandeur à un seuil de déclenchement instantané, de manière à fournir un signal de déclenchement instantané lorsque ladite grandeur dépasse ledit seuil.

Les déclencheurs électroniques connus comportent une unité de traitement, généralement à microprocesseur, effectuant notamment des fonctions de déclenchement long retard, court retard et instantané. Pour assurer la sélectivité entre deux disjoncteurs connectés en série ou en cascade, il est connu de prévoir un calibre élevé pour le disjoncteur amont et un calibre plus bas pour le disjoncteur aval. Dans ce cas la sélectivité en déclenchement instantané est du type ampèremètrique, le seuil de déclenchement instantané du disjoncteur aval étant inférieur à celui du disjoncteur amont.

Il est également connu d'utiliser une sélectivité de type chronométrique entre deux disjoncteurs. Dans ce cas le déclencheur du disjoncteur amont a une temporisation de déclenchement instantané supérieure au temps de déclenchement instantané du déclencheur du disjoncteur aval.

Ces deux types de sélectivité ne sont pas toujours efficaces lorsque des courants de court-circuit sont très élevés car des seuils de courant importants sont atteints dans les deux disjoncteurs et une temporisation trop longue du déclencheur associé risque d'user prématurément les contacts du disjoncteur amont.

Pour réduire ces inconvénients on a proposé, notamment dans le document EP-A-128084, un déclencheur sélectif comportant un compteur permettant de compter les cycles successifs d'ouverture et de fermeture des contacts du disjoncteur en cas de court-circuit.

On a également proposé, notamment dans le document EP-A-872939, d'inhiber un ordre de déclenchement instantané si des répulsions sont détectées pour des courants primaires inférieurs à un seuil prédéterminé.

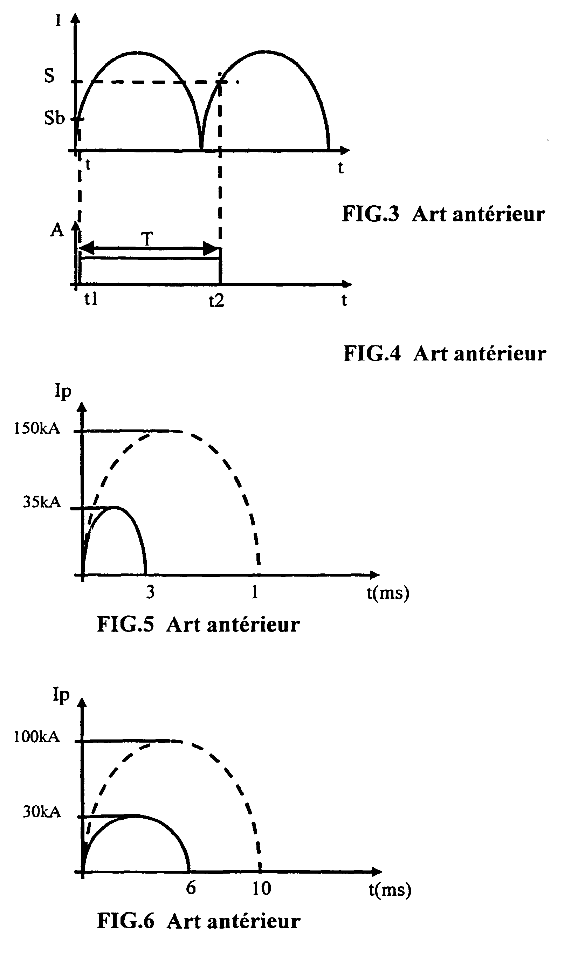

Un autre type de déclenchement instantané sélectif, qui sera décrit plus en détail au regard des figures 3 et 4, utilise une temporisation lorsque le courant a dépassé un premier seuil, bas, et un second seuil, plus élevé, après cette temporisation.

Dans tous les déclencheurs sélectifs connus, il est en pratique nécessaire d'attendre au moins deux crêtes du courant de court-circuit avant de prendre une décision de déclenchement instantané. Ceci conduit à une usure préjudiciable des contacts du disjoncteur.

L'invention a pour but un déclencheur sélectif ne possédant pas ces inconvénients. Le déclencheur sélectif selon l'invention doit être plus rapide que les déclencheurs sélectifs connus, tout en assurant la sélectivité avec un disjoncteur aval, de manière à réduire au maximum l'usure des contacts en cas de court-circuit.

Ce but est atteint par le fait que les moyens de traitement comportent des moyens de détermination d'une seconde grandeur, représentative du temps nécessaire au courant pour atteindre la valeur crête, et des moyens de détermination du seuil de déclenchement instantané selon une fonction décroissante de la seconde grandeur.

Selon un développement de l'invention le seuil de déclenchement instantané varie en fonction de la seconde grandeur selon une courbe disposée entre des première et seconde courbes représentatives d'enveloppes des valeurs crête du courant, dont la première est obtenue lorsque le disjoncteur associé n'est pas connecté en série avec un autre disjoncteur disposé en aval et dont la seconde est obtenue lorsque le disjoncteur associé est connecté en série avec un autre disjoncteur disposé en aval. Les première et seconde courbes sont, de préférence, déterminées expérimentalement.

Le déclencheur selon l'invention permet ainsi de ne pas ouvrir inutilement le disjoncteur associé lorsqu'il est disposé en série avec un disjoncteur aval. Par contre, en l'absence de disjoncteur aval, l'absence de celui-ci est détectée en moins d'une demi-période du courant, ce qui permet de minimiser l'effet destructeur de la répulsion des contacts en cas de court-circuit.

D'autres avantages et caractéristiques ressortiront plus clairement de la description suivante de modes particuliers de réalisation, donnés à titre d'exemples non limitatifs et représentés aux dessins annexés sur lesquels :
La figure 1 représente, sous forme de schéma-bloc, un déclencheur de type connu dans lequel l'invention peut être mise en oeuvre.
La figure 2 illustre schématiquement un mode particulier de réalisation d'une installation électrique comportant des disjoncteurs en série et dans laquelle le déclencheur selon l'invention peut être utilisé.
Les figures 3 et 4 illustrent le fonctionnement d'un déclencheur instantané sélectif, de type connu, utilisant une temporisation.
Les figures 5 et 6 représentent les variations, en fonction du temps, du courant primaire Ip (en traits pleins) pour deux valeurs différentes du courant présumé du court- circuit (en traits pointillés), dans un disjoncteur de type connu ayant un certain pouvoir de limitation.
La figure 7 représente deux familles de courbes représentatives des variations, en fonction du temps, du courant primaire Ip, mesuré expérimentalement dans un disjoncteur seul (en pointillés) et, respectivement, connecté en série avec un autre disjoncteur disposé en aval (en traits pleins).
La figure 8 représente, en fonction de l'instant tc d'apparition de la première crête du courant Ip, les enveloppes E1 et E2 des valeurs crête de deux familles de courbes, respectivement avec un disjoncteur isolé et avec deux disjoncteurs en série, ainsi qu'une courbe E3 représentative du seuil de déclenchement instantané selon l'invention.
Les figures 9 à 12 illustrent divers modes de réalisation de la courbe représentative de la valeur S du seuil de déclenchement instantané selon l'invention en fonction du temps tc nécessaire au courant pour atteindre la valeur crête.
La figure 13 représente les variations, en fonction du temps, du courant I mesuré dans le déclencheur selon l'invention.
La figure 14 est une variante de la figure 13 dans laquelle le déclencheur réalise une mesure du courant I par échantillonnage.
Les figures 15 et 16 illustrent deux variantes d'un organigramme de traitement pouvant être utilisé dans un déclencheur selon l'invention.
Les figures 17 et 18 représentent deux modes de réalisation particuliers, de type connu, d'un capteur de courant pouvant être utilisé dans un déclencheur selon l'invention.

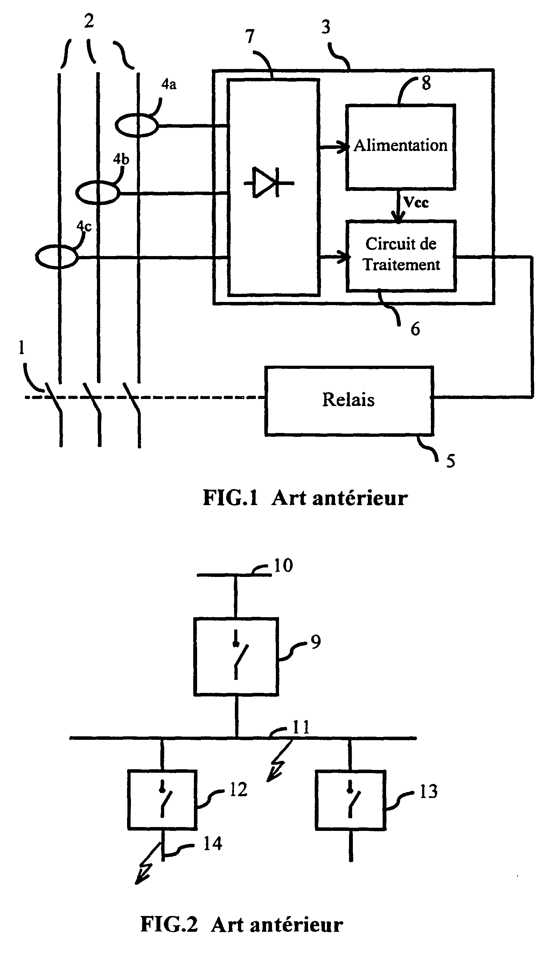

Sur la figure 1, des contacts 1 d'un disjoncteur permettent d'interrompre la circulation du courant dans les conducteurs d'un réseau électrique 2, triphasé dans le mode de réalisation particulier représenté. Un déclencheur électronique associé au disjoncteur comporte une unité de traitement 3 connectée à des capteurs de courant 4a, 4b et 4c fournissant des signaux représentatifs des courants primaires circulant dans les conducteurs du réseau. L'unité de traitement 3 peut réaliser diverses fonctions de déclenchement et fournit, le cas échéant, un signal de déclenchement à un relais 5 d'ouverture des contacts 1 du disjoncteur associé.

L'unité de traitement 3 représentée à la figure 1 comporte un circuit de traitement 6, de préférence à microprocesseur, recevant des signaux I représentatifs des courants mesurés, éventuellement par l'intermédiaire d'un circuit de mise en forme 7. Ce dernier assure notamment le redressement des signaux fournis par les capteurs de courant.

L'unité de traitement comporte également un circuit d'alimentation 8 qui fournit au circuit de traitement une tension d'alimentation Vcc adaptée. Dans le mode de réalisation représenté à la figure 1, le déclencheur est à propre courant, c'est-à-dire que le circuit d'alimentation 8 est alimenté par les capteurs de courant 4a à 4c, par l'intermédiaire du circuit de mise en forme 7. L'alimentation Vcc disparaît après ouverture du disjoncteur.

L'installation électrique représentée à la figure 2 comporte un premier disjoncteur 9, ou disjoncteur amont, connecté à une ligne principale 10 et alimentant une ligne secondaire 11, elle-même connectée à deux disjoncteurs avals 12 et 13.

Si un court-circuit se produit sur une ligne 14 alimentée par un disjoncteur aval, le disjoncteur 12 sur la figure 2, le disjoncteur amont 9 détecte le défaut. Cependant il doit avoir un comportement sélectif et, dans ce cas, ne doit pas déclencher immédiatement. En effet, le disjoncteur aval 12 détecte également le défaut, s'ouvre et annule le courant du court-circuit. Le disjoncteur amont 9, sélectif, ne détecte plus de défaut, ne déclenche pas, et continue à alimenter d'autres disjoncteurs ou appareils, comme le disjoncteur 13.

Un court-circuit se produisant sur la ligne 11, alimentée directement par le disjoncteur amont 9, est détecté uniquement par le disjoncteur amont 9. Dans ce cas, le disjoncteur amont 9 doit déclencher le plus rapidement possible.

Dans l'art antérieur, la sélectivité du disjoncteur amont est assurée, par exemple, par un déclencheur sélectif, associé au disjoncteur amont et utilisant une temporisation. Le fonctionnement d'un tel déclencheur va être décrit succinctement au regard des figures 3 et 4.

Le circuit de traitement 6 du déclencheur sélectif compare le courant I à un seuil bas Sb. Lorsque ce seuil est atteint, à un instant t1 (fig.3), un signal A de temporisation change de valeur. A titre d'exemple, le signal A passe de 0 à 1 à l'instant t1 sur la figure 4. Le signal A garde cette valeur, 1, pendant une durée de temporisation prédéterminée T puis repasse à sa valeur initiale, 0, à un instant t2. Dans un mode de réalisation préférentiel, la temporisation a une durée T = 8,125 ms, pour un réseau à 50 Hz.

Pendant toute la durée de la temporisation, le déclencheur sélectif ne peut déclencher. Par contre, ceci permet à un disjoncteur aval, s'il existe, d'éliminer un défaut pendant ce temps. A la fin de la temporisation, le déclencheur sélectif compare le courant I à un seuil haut Sh>Sb. Si un disjoncteur aval a éliminé le défaut pendant la durée de la temporisation, avant l'instant t2, le courant I mesuré par le déclencheur sélectif ne dépasse pas le seuil Sh. Par contre, le défaut peut ne pas avoir été éliminé à l'instant t2, soit parce qu'il n'y a pas de disjoncteur aval, soit en raison d'un mauvais fonctionnement de celui-ci, soit parce que le défaut n'affecte pas le disjoncteur aval (court-circuit sur la ligne 11 de la figure 2 par exemple). Dans ce cas, comme représenté à la figure 3, le courant I dépasse le seuil haut Sh et le déclencheur sélectif provoque l'ouverture du disjoncteur amont. Le déclenchement du disjoncteur amont a ainsi été retardé et ce retard, qui est par exemple de l'ordre de 14 ms, provoque une usure du disjoncteur. Le courant de défaut traversant le disjoncteur amont n'est jamais coupé avant d'avoir atteint deux fois sa valeur crête. En pratique, en fonction notamment de la fréquence d'échantillonnage, il est même souvent nécessaire d'attendre 3 passages par la valeur crête avant ouverture du disjoncteur amont.

L'invention est destinée à supprimer cet inconvénient. Le déclencheur sélectif selon l'invention doit être capable de ne pas déclencher si le disjoncteur aval est présent et de déclencher très rapidement, en moins d'une demi-période si le disjoncteur aval est absent, de manière à minimiser l'effet destructeur de la répulsion des contacts du disjoncteur amont et à augmenter le nombre de coupures réalisables par ce disjoncteur.

L'invention prend en compte certaines particularités du courant primaire traversant le disjoncteur amont en cas de court-circuit.

On sait qu'en cas de court-circuit un disjoncteur a un certain pouvoir de limitation, plus ou moins important selon le type de disjoncteur. Les figures 5 et 6 illustrent les variations, en fonction du temps, du courant primaire Ip pour deux valeurs différentes du courant présumé de court-circuit. Sur la figure 5, un courant présumé de court-circuit de 150kAeff (en pointillé) donne un courant limité ayant une valeur crête de 35 kA et une durée de 3ms. Par contre, sur la figure 6, un courant présumé de court-circuit inférieur au précédent, par exemple de 100 kAeff (en pointillé) engendre un courant limité ayant une valeur crête de 30 kA, légèrement inférieure à la précédente, et une durée de 6 ms, supérieure à la précédente.

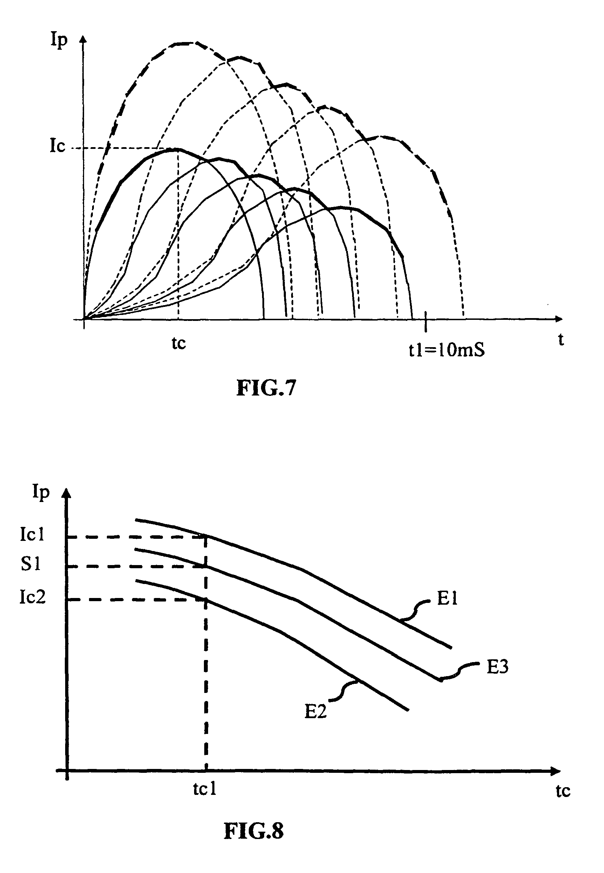

La figure 7 représente deux familles de courbes obtenues expérimentalement et représentant les variations, en fonction du temps, du courant primaire Ip dans un disjoncteur en cas de court-circuit. La première famille de courbes, en pointillés, correspond à un disjoncteur isolé. La seconde famille de courbes, en traits pleins, correspond au courant primaire traversant le disjoncteur amont lorsqu'un disjoncteur aval, avec lequel il est connecté en série, est traversé par le courant de court-circuit, ce qui entraîne une répulsion des contacts du disjoncteur aval, de calibre inférieur au disjoncteur amont, et une limitation du courant de court-circuit traversant les deux disjoncteurs. A l'intérieur de chaque famille de courbes, les différentes courbes sont obtenues pour différentes valeurs du courant de court-circuit présumé et, comme sur les figures 5 et 6, la durée du courant primaire augmente lorsque l'amplitude de la première crête du courant décroît.

On observe également que, pour un même courant présumé de court-circuit, la première crête arrive plus rapidement lorsque le disjoncteur aval a répulsé (traits pleins) que lorsque l'appareil amont est seul (en pointillé). Sur la figure 7 on a représenté en gras les enveloppes des valeurs crête des deux familles de courbes.

Des essais ont été réalisés en modifiant, pour chaque famille de courbes, d'une part le courant présumé de court-circuit et, d'autre part, l'angle d'enclenchement de l'essai, de manière à prendre en compte les différents cas de figures envisageables pour un court-circuit (amplitude, court-circuit symétrique, asymétrique...). On peut, de cette façon, tracer pour chaque disjoncteur les enveloppes des valeurs crête Ic de deux familles de courbes, en fonction de l'instant tc d'apparition de la première crête de courant. Sur la figure 8, la courbe E1 correspond à une enveloppe obtenue avec un disjoncteur isolé et la courbe E2 à une enveloppe obtenue avec des disjoncteurs amont et aval en série. A un instant tc1 d'apparition de la première crête sont ainsi associées deux valeurs de l'amplitude Ic du courant crête, une première valeur Ic1 correspondant au cas où le disjoncteur est isolé (courbe E1) et une seconde valeur Ic2 correspondant au cas où le disjoncteur est en série avec un disjoncteur aval (courbe E2). A chaque instant tc1 d'apparition de la première crête, la seconde valeur Ic2 est inférieure à la première valeur Ic1.

L'invention utilise cette propriété pour permettre au déclencheur sélectif de différencier, lors d'un court-circuit, le cas où le disjoncteur associé est isolé du cas où il est en série avec un disjoncteur aval et adapter en conséquence sa stratégie de déclenchement instantanée.

Dans ce but on définit un seuil de déclenchement instantané S qui est une fonction décroissante de l'instant tc d'apparition de la crête du signal de courant. Sur la figure 8, une courbe E3 représente cette fonction S(tc). La courbe E3 est disposée entre les courbes E1 et E2. Ainsi à chaque valeur (tc1) de l'instant d'apparition de la première crête correspond une valeur de seuil (S1) comprise entre les valeurs associées (Ic1, Ic2) des courbes E1 et E2 : Ic2 <S1 <Ic1.

L'écart entre les courbes E1 et E2 est d'autant plus important que les calibres des disjoncteurs sont différents. Cet écart augmente également avec le pouvoir de limitation du disjoncteur aval. En effet, plus celui-ci a un pouvoir de limitation élevé, plus les valeurs crête correspondantes sont basses. Un écart optimal est obtenu avec une disjoncteur aval ayant un très bon pouvoir de limitation, un disjoncteur amont sans pouvoir de limitation, le calibre du disjoncteur amont étant au moins le double du calibre du disjoncteur aval.

Les valeurs Ic sont représentatives des valeurs crête des courants primaires. Le déclencheur sélectif utilise, en pratique, de manière très classique, les valeurs mesurées par les capteurs de courant.

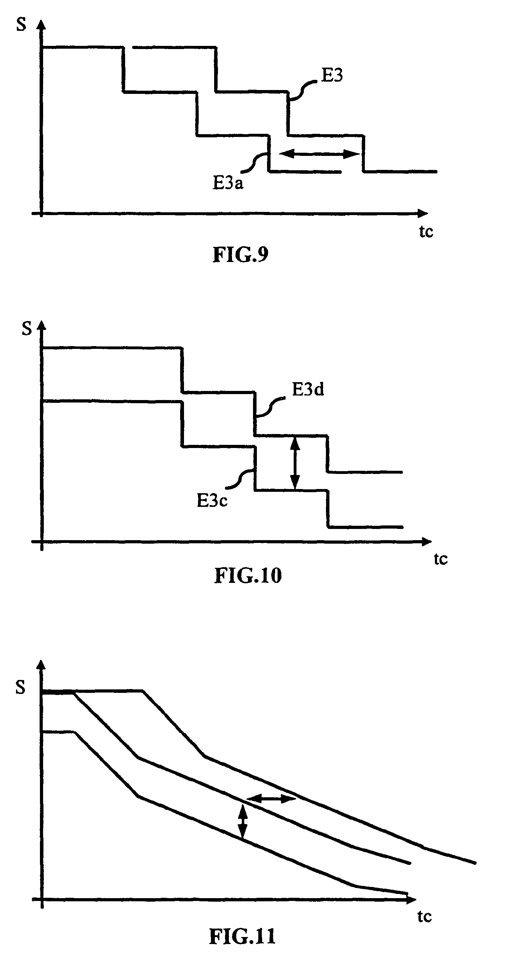

Selon un premier mode de réalisation de l'invention, la fonction S(tc) est une fonction en escalier, comme représenté aux figures 9 et 10. Ce type de fonction est plus particulièrement adapté à une mise en mémoire sous forme de tables dans un déclencheur à microprocesseur.

Sur la figure 9, deux courbes S(tc) sont représentées, la courbe E3b étant décalée temporellement par rapport à la courbe E3a. La courbe E3a est utilisée dans les déclencheurs à propre courant (fig.1) dans lesquels l'alimentation du circuit de traitement n'est assurée que par l'intermédiaire des capteurs de courant, c'est-à-dire lorsque l'unité de traitement n'est pas alimentée au préalable. La courbe E3b est utilisée dans le cas où le déclencheur est toujours alimenté (alimentation préalable de l'unité de traitement) par exemple par l'intermédiaire d'une alimentation auxiliaire (ou alors quand le disjoncteur fonctionnait déjà au courant nominal au moment du court-circuit).

Sur la figure 10, une courbe E3d est décalée en amplitude par rapport à une courbe E3c.
A titre d'exemple, la courbe E3c est utilisée dans un déclencheur associé avec un disjoncteur de calibre 250 A, tandis que la courbe E3d est associée à un disjoncteur de calibre plus élevé, par exemple de 630 A. Pour une même valeur de l'instant tc, le seuil correspondant à la courbe E3d est supérieur au seuil correspondant à la courbe E3c.

Il est possible de prévoir une pluralité de tables dans le déclencheur sélectif, correspondant aux diverses options possibles (avec ou sans alimentation préalable, différents calibres) et de valider l'option choisie dans le déclencheur lors de son installation.

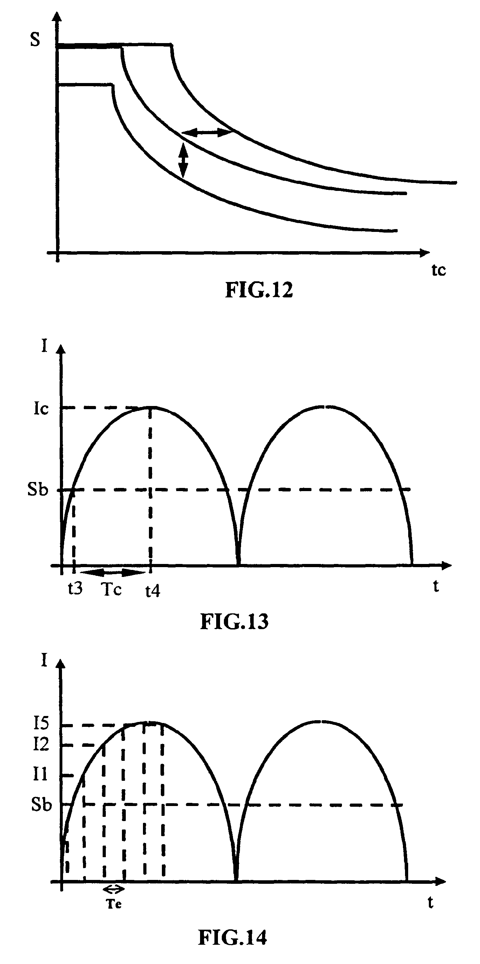

Selon un autre mode de réalisation de l'invention (fig.11), la fonction S(tc) peut être constituée par une pluralité de segments de droites de pentes différentes. Comme sur les figures 9 et 10, cette fonction peut être décalée temporellement ou en amplitude en fonction des diverses options possibles.

Il en va de même dans le mode de réalisation de la figure 12 dans lequel la fonction S(tc) est obtenue à partir d'une fonction mathématique.

Le fonctionnement d'un mode particulier de réalisation d'un déclencheur selon l'invention va être explicité ci-dessous, au regard de la figure 13, qui représente les variations, en fonction du temps, du courant 1 fourni au circuit de traitement 6 du déclencheur (en l'absence de déclenchement).

Dans ce mode particulier de réalisation, le circuit de traitement compare le courant 1 à un seuil bas Sb. Dès que ce seuil est atteint (instant t3), le déclencheur initialise le comptage du temps Tc nécessaire au courant I pour atteindre sa première valeur crête Ic (instant t4). En utilisant une courbe S(tc) prédéterminée du type défini ci-dessus, le déclencheur adapte en conséquence le seuil de déclenchement instantané à une valeur S(Tc). Si, à l'instant t4, le courant Ic dépasse le seuil S(Tc), le disjoncteur associé est considéré comme isolé et un ordre de déclenchement est immédiatement produit. Par contre si, à l'instant t4, le courant Ic reste inférieur au seuil S(Tc), alors, le déclencheur considère que le disjoncteur associé est connecté en série avec un disjoncteur aval et ne déclenche pas, le disjoncteur aval éliminant alors le défaut.

Ainsi, en l'absence du disjoncteur aval, il n'y a pas de temporisation du déclenchement du disjoncteur isolé et une diminution de l'usure de celui-ci. La décision de non-temporisation étant prise dès la première crête du signal (t4), le nombre de coupures sur court-circuit pouvant être réalisées par un disjoncteur peut passer de 2 ou 3 dans l'art antérieur à 6 à 9 avec le déclencheur sélectif selon l'invention.

Selon un mode de réalisation préférentiel, le circuit de traitement du déclencheur réalise une mesure du courant par échantillonnage comme représenté à la figure 14. Le courant est échantillonné avec une période d'échantillonnage prédéterminée Te.

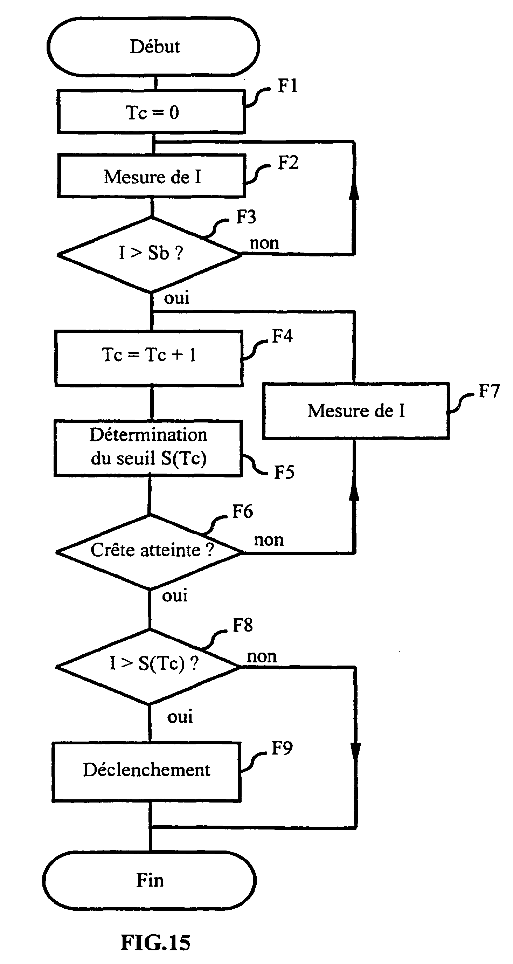

Selon l'organigramme de la figure 15, le traitement commence par une étape F1 d'initialisation, pendant laquelle la grandeur Tc, représentative du temps nécessaire au courant pour atteindre la valeur crête, est mise à zéro. Puis le circuit de traitement effectue (F2) une mesure d'un échantillon de courant. Il compare ensuite (F3) l'amplitude de cet échantillon au seuil bas Sb. Si cette amplitude est inférieure ou égale à Sb (sortie non de F3), le circuit repasse à l'étape F2. Si le seuil Sb a été atteint (sortie oui de F3), le circuit de traitement incrémente (F4) la valeur de Tc : Tc = Tc + 1. Ainsi lorsque l'amplitude d'un premier échantillon (I1 sur la figure 14) excède le seuil Sb, la grandeur Tc prend la valeur 1. Puis le circuit de traitement détermine (F5) la valeur S(Tc) du seuil associé à cette valeur de Tc. Il examine ensuite (F6) si la crête est atteinte. Si ce n'est pas le cas (sortie non de F6), il effectue (F7) une nouvelle mesure de I, avant de retourner à l'étape F4. A chaque nouvel échantillon, la grandeur Tc est incrémentée et le seuil correspondant déterminé. Lorsque la crête est atteinte (sortie oui de F6), le circuit de traitement compare le dernier échantillon au seuil S(Tc). Si le seuil n'est pas dépassé (sortie non de F8), le traitement est terminé, le court-circuit étant traité par le disjoncteur aval. Par contre, si le seuil est dépassé (sortie oui de F8), le circuit de traitement provoque (F9) le déclenchement du disjoncteur.

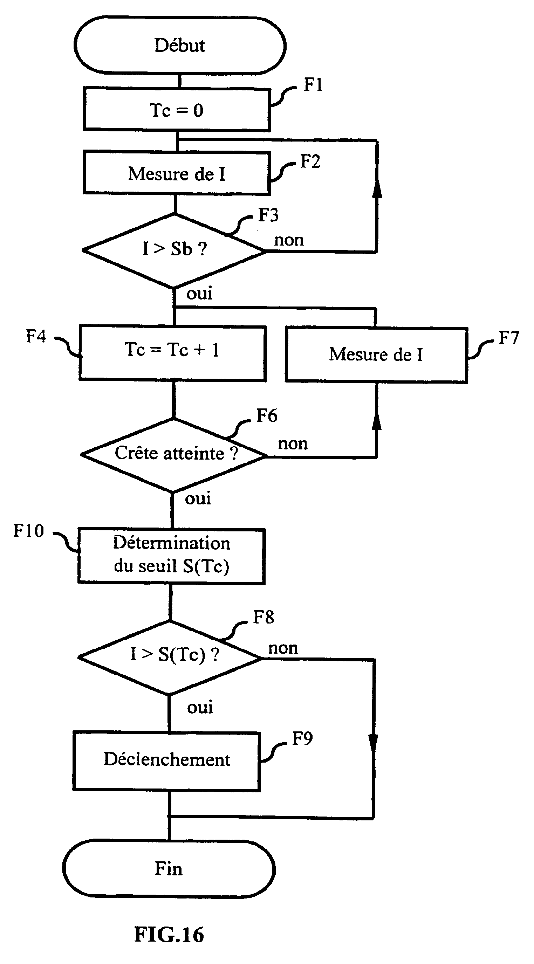

Dans la variante représentée à la figure 16, l'étape F5 est supprimée et remplacée par une étape équivalente, F10, intercalée entre les étapes F6 et F8. Ainsi, dans le premier mode de réalisation, le seuil est adapté en permanence à la dernière valeur de la grandeur Tc mesurée. Par contre, dans le second mode de réalisation, le seuil n'est déterminé que lorsque la crête a été atteinte, ce qui minimise le temps de traitement à chaque échantillon.

Dans un mode de réalisation préférentiel, la crête est considérée comme atteinte lorsque la valeur du courant redescend, c'est-à-dire lorsque l'amplitude du dernier échantillon est inférieure à celle de l'échantillon précédent. Sur la figure 14, l'amplitude du 5^{ième} échantillon (I₅) est inférieure à celle du précédent (I₅ < I₄). La crête est donc considérée comme atteinte lorsque la grandeur Tc est égale à 5, ce qui est représentatif de 5 fois la période Te d'échantillonnage. Le seuil correspondant à cette durée est alors utilisé pour prendre une éventuelle décision de déclenchement instantané.

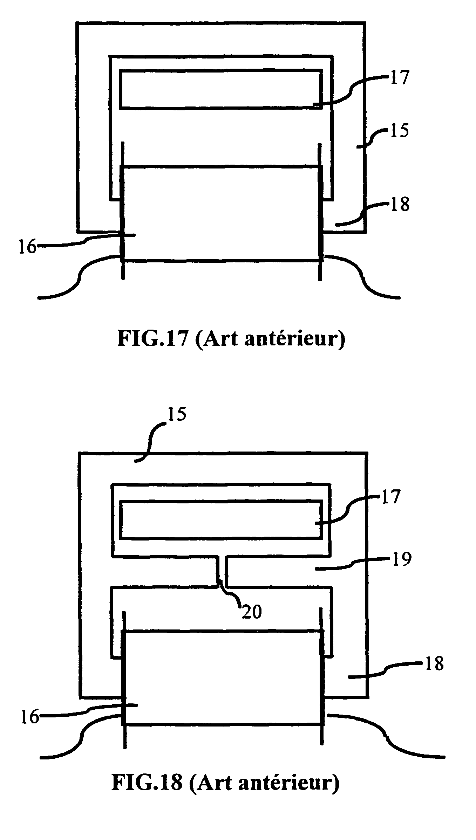

Pour que les résultats obtenus soient fiables il faut que le courant fourni par un capteur soit représentatif du courant primaire. Plus la rémanence du capteur est faible et moins il sature, plus les résultats sont fiables. Les figures 17 et 18 représentent deux types de capteur de courant de type connu répondant de manière satisfaisante à ces conditions.

Le capteur de courant selon la figure 17 est un capteur linéaire. Il comporte un circuit magnétique et un enroulement secondaire constitué par une bobine 16. Le circuit magnétique, constitué généralement de tôles empilées, entoure le conducteur 17 du réseau où circule le courant primaire à mesurer. Une partie 18 du circuit magnétique 15 passe au centre de l'enroulement secondaire et forme le noyau de la bobine 16.

Le mode de réalisation préférentiel du capteur de courant, représenté à la figure 18 est un capteur fer à effet shunt du type décrit dans le document EP-A-704867. Il comporte un shunt magnétique 19, mis en dérivation sur le noyau magnétique de l'enroulement secondaire et comportant un entrefer 20. Un tel capteur de courant présente notamment une rémanence inférieure à celle des autres types de capteur, ce qui le rend plus fiable pour la mesure de la première crête.

L'invention n'est cependant pas limitée à un type particulier de capteur de courant. D'autres types de capteur de courant linéaire peuvent notamment être utilisés. A titre d'exemple on peut utiliser des capteurs de courant Air, des capteurs Fer, des capteurs à effet Hall...

L'invention s'applique aussi bien à un réseau monophasé que polyphasé. Dans ce dernier cas, le traitement est effectué séparément pour chaque phase.

Le seuil bas Sb (figures 13 et 14) est de préférence différent de zéro. Les courbes S(tc) sont adaptées pour tenir compte de la valeur de Sb choisie

## Revendications

1. Déclencheur électronique sélectif associé à un disjoncteur (9) et comportant :
- des moyens (4a, 4b, 4c) de mesure du courant traversant le disjoncteur,
- des moyens (3) de traitement, connectés aux moyens de mesure du courant et comportant des moyens (F2, F7) de détermination d'une grandeur représentative de la valeur crête du courant, des moyens (F8) de comparaison de ladite grandeur à un seuil S(Tc) de déclenchement instantané, de manière à fournir un signal (D) de déclenchement instantané lorsque ladite grandeur dépasse ledit seuil,
déclencheur **caractérisé en ce que** les moyens de traitement (3) comportent des moyens (F4) de détermination d'une seconde grandeur, représentative du temps nécessaire au courant pour atteindre la valeur crête, et des moyens (F5, F10) de détermination du seuil de déclenchement instantané selon une fonction décroissante de la seconde grandeur (Tc).

2. Déclencheur selon la revendication 1, **caractérisé en ce que** le seuil S(Tc) de déclenchement instantané varie en fonction de la seconde grandeur (Tc) selon une courbe (E3) disposée entre des première et seconde courbes (E1, E2) représentatives d'enveloppes des valeurs crête du courant, dont la première (E1) est obtenue lorsque le disjoncteur associé (9) n'est pas connecté en série avec un autre disjoncteur disposé en aval et dont la seconde (E2) est obtenue lorsque le disjoncteur associé (9) est connecté en série avec un autre disjoncteur (12, 13) disposé en aval.

3. Déclencheur selon la revendication 2, **caractérisé en ce que** les première et seconde courbes (E1, E2) sont déterminées expérimentalement.

4. Déclencheur selon l'une quelconque des revendications précédentes, **caractérisé en ce que** la seconde grandeur (Tc) est représentative du temps nécessaire au courant pour atteindre la valeur crête à partir du dépassement par le courant d'un seuil bas prédéterminé (Sb).

5. Déclencheur selon l'une quelconque des revendications précédentes **caractérisé en ce que** ladite fonction est une fonction en escalier.

6. Déclencheur selon l'une quelconque des revendications 1 à 4, **caractérisé en ce que** ladite fonction est constituée par une pluralité de segments de droites de pentes différentes.

7. Déclencheur selon l'une quelconque des revendications précédentes, **caractérisé en ce que**, pour une seconde grandeur (Tc) prédéterminée, l'amplitude du seuil de déclenchement instantané augmente avec le calibre du disjoncteur.

8. Déclencheur selon l'une quelconque des revendications précédentes, **caractérisé en ce que** ladite courbe de variation du seuil de déclenchement instantané est décalé temporellement lorsque les moyens de traitement ne sont pas alimentés au préalable.

9. Déclencheur selon l'une quelconque des revendications précédentes, **caractérisé en ce que** les moyens de mesure du courant comportent au moins un capteur de courant linéaire.

10. Déclencheur selon l'une quelconque des revendications 1 à 8, **caractérisé en ce que** les moyens de mesure du courant comportent au moins un capteur fer à effet shunt.

## Claims

1. A selective electronic trip device associated with a circuit breaker (9) and comprising:
- means (4a, 4b, 4c) for measuring the current flowing in the circuit breaker,
- processing means (3) connected to the means for measuring the current and comprising means (F2, F7) for determining a quantity representative of the peak value of the current, means (F8) for comparing said quantity with an instantaneous tripping threshold S(Tc) so as to provide an instantaneous tripping signal (D) when said quantity exceeds said threshold,
a trip device **characterized in that** the processing means (3) comprise means (F4) for determining a second quantity representative of the time necessary for the current to reach the peak value, and means (F5, F10) for determining the instantaneous tripping threshold according to a decreasing function of the second quantity (Tc).

2. The trip device according to claim 1, **characterized in that** the instantaneous tripping threshold S(Tc) varies according to the second quantity (Tc) according to a curve (E3) disposed between first and second curves (E1, E2) representative of envelopes of the peak values of the current, the first curve (E1) being obtained when the associated circuit breaker (9) is not connected in series with another circuit breaker arranged down-line and the second curve (E2) being obtained when the associated circuit breaker (9) is connected in series with another circuit breaker (12, 13) arranged down-line.

3. The trip device according to claim 2, **characterized in that** the first and second curves (E1, E2) are determined experimentally.

4. The trip device according to any one of the foregoing claims, **characterized in that** the second quantity (Tc) is representative of the time necessary for the current to reach the peak value from the moment the current exceeds a preset low threshold (Sb).

5. The trip device according to any one of the foregoing claims, **characterized in that** said function is a step function.

6. The trip device according to any one of claims 1 to 4, **characterized in that** said function is constituted by a plurality of segments of straight lines with different slopes.

7. The trip device according to any one of the foregoing claims, **characterized in that**, for a preset second quantity (Tc), the amplitude of the instantaneous tripping threshold increases with the circuit breaker rating.

8. The trip device according to any one of the foregoing claims, **characterized in that** said instantaneous tripping threshold variation curve is staggered in time when power is not supplied to the processing means beforehand.

9. The trip device according to any one of the foregoing claims, **characterized in that** the means for measuring the current comprise at least one linear current sensor.

10. The trip device according to any one of claims 1 to 8, **characterized in that** the means for measuring the current comprise at least one shunt effect iron sensor.

## Patentansprüche

1. - Elektronischer Selektivauslöser, der einem Leistungsschalter (9) zugeordnet ist und
- Messmittel (4a, 4b, 4c) zur Messung des über den Leistungsschalter fließenden Stroms,
- sowie an die Messmittel angeschlossene Verarbeitungsmittel (3) mit Mitteln (F2, F7) zur Bestimmung einer den Scheitelwert des Stroms abbildenden Größe und mit Mitteln (F8) zum Vergleich der genannten Größe mit einem Ansprechwert S(Tc) der unverzögerten Auslösung umfasst, derart dass ein Signal (D) zur unverzögerten Auslösung geliefert wird, wenn die genannte Größe den genannten Ansprechwert überschreitet, **dadurch gekennzeichnet, dass** die Verarbeitungsmittel (3) Mittel (F4) zur Bestimmung einer zweiten Größe, welche die vom Strom zum Erreichen des Scheitelwerts benötigte Zeit abbildet, sowie Mittel (F5, F10) zur Bestimmung des Ansprechwerts der unverzögerten Auslösung als fallende Funktion der zweiten Größe (Tc) umfassen.

2. - Auslöser nach Anspruch 1, **dadurch gekennzeichnet, dass** sich der Ansprechwert S(Tc) der unverzögerten Auslösung in Abhängigkeit von der zweiten Größe (Tc) gemäß einer Kurve (E3) ändert, die zwischen einer ersten und einer zweiten Kurve (E1, E2) verläuft, welche jeweils Hüllkurven der Scheitelwerte des Stroms abbilden, wobei sich die erste Kurve (E1) ergibt, wenn der zugeordnete Leistungsschalter (9) nicht mit einem weiteren, nachgeschalteten Leistungsschalter in Reihe geschaltet ist, und sich die zweite Kurve (E2) ergibt, wenn der zugeordnete Leistungsschalter (9) mit einem weiteren, nachgeschalteten Leistungsschalter (12, 13) in Reihe geschaltet ist.

3. - Auslöser nach Anspruch 2, **dadurch gekennzeichnet, dass** die erste und die zweite Kurve (E1, E2) experimentell bestimmt werden.

4. - Auslöser nach irgendeinem der vorhergehenden Ansprüche, **dadurch gekennzeichnet, dass** die zweite Größe (Tc) die Zeitdauer abbildet, die der Strom zum Erreichen des Scheitelwerts benötigt, nachdem er einen bestimmten unteren Ansprechwert (Sb) überschritten hat.

5. - Auslöser nach irgendeinem der vorhergehenden Ansprüche, **dadurch gekennzeichnet, dass** die genannte Funktion eine Treppenfunktion ist.

6. - Auslöser nach irgendeinem der Ansprüche 1 bis 4, **dadurch gekennzeichnet, dass** die genannte Funktion aus mehreren Geradenabschnitten unterschiedlicher Steigung besteht.

7. - Auslöser nach irgendeinem der vorhergehenden Ansprüche, **dadurch gekennzeichnet, dass** bei einem bestimmten Wert der zweiten Größe (Tc) die Amplitude des Ansprechwerts der unverzögerten Auslösung mit zunehmendem Nennstrom des Leistungsschalters ansteigt.

8. - Auslöser nach irgendeinem der vorhergehenden Ansprüche, **dadurch gekennzeichnet, dass** die genannte Kurve der Änderung des Ansprechwerts der unverzögerten Auslösung zeitlich verschoben ist, wenn die Verarbeitungsmittel nicht vorher an eine Stromversorgung angeschlossen sind.

9. - Auslöser nach irgendeinem der vorhergehenden Ansprüche, **dadurch gekennzeichnet, dass** die Strommessmittel mindestens einen linearen Stromwandler umfassen.

10. - Auslöser nach irgendeinem der Ansprüche 1 bis 8, **dadurch gekennzeichnet, dass** die Strommessmittel mindestens einen Eisenwandler mit Nebenschlusswirkung umfassen.
